# EUROPÄISCHE PATENTSCHRIFT

(11) **EP 2 525 938 B1**
(45) Veröffentlichungstag und Bekanntmachung des Hinweises auf die Patenterteilung: **24.07.2013**
(21) Anmeldenummer: 11741603.2
(22) Anmeldetag: 11.08.2011
(51) Int. Cl.: B23K 20/02, B23K 20/04, B21B 1/38, B21D 39/03, H05B 3/30, H05B 3/48

(54) **VERFAHREN ZUR HERSTELLUNG EINER METALLPLATTE MIT EINGEBETTETEM HEIZELEMENT, SOWIE DANACH HERGESTELLTE METALLPLATTE**
PROCESS FOR PRODUCING A METAL PLATE HAVING AN EMBEDDED HEATING ELEMENT AND METAL PLATE PRODUCED THEREBY
PROCÉDÉ DE FABRICATION D'UNE PLAQUE MÉTALLIQUE À ÉLÉMENT CHAUFFANT INTÉGRÉ ET PLAQUE MÉTALLIQUE AINSI FABRIQUÉE

(30) Priorität: 16.08.2010 DE 102010037005
(43) Veröffentlichungstag der Anmeldung: 28.11.2012
(73) Patentinhaber: Alinox AG, 8360 Eschlikon (CH)
(72) Erfinder: HOFFSTAEDTER, Norbert, 82057 Icking (DE); SPRING, Markus, CH-8360 Eschlikon (CH)
(74) Vertreter: Schumacher & Willsau
(86) Internationale Anmeldenummer: PCT/EP2011/063858
(87) Internationale Veröffentlichungsnummer: WO 2012/022671

(56) Entgegenhaltungen:
- CN-A- 101 574 861
- DE-U1- 20 108 963
- FR-A1- 2 698 582
- US-A- 4 934 581

## Beschreibung

Die Erfindung betrifft ein Verfahren zum Herstellen einer Metallplatte mit eingebettetem Heizelement durch folgende Schritte:
a) Anordnen von wenigstens einem Heizelement zwischen wenigstens zwei Plattenkörpern, die nicht mit Ausnehmungen zur Aufnahme des oder jedes Heizelements versehen sind,
b) Einbetten des oder jedes Heizelements unmittelbar kontaktierend in wenigstens zwei Plattenkörper durch Zusammenpressen und Materialverdrängung der Plattenkörper und
c) wenigstens stellenweises stoffschlüssiges Miteinanderverbinden der Plattenkörper.

Außerdem betrifft die Erfindung eine Metallplatte, hergestellt durch dieses oder ein ähnliches Verfahren aus wenigstens zwei nicht mit Ausnehmungen versehenen Plattenkörpern, in die mindestens ein Heizelement allein durch Materialverdrängung eingebettet worden ist.

Ein solches Verfahren und eine solche Metallplatte sind aus dem Dokument DE 201 08 963 U1 bekannt. Bei diesem bekannten Verfahren werden die beiden Plattenkörper erhitzt, bei Aluminium z.B. auf 400 °C, und so fest zusammengepresst, dass die Heizelemente in sie eingebettet werden. Die benachbarten Grenzflächen der beiden Plattenkörper sind anschließend in flächiger Berührung und werden durch mehrere Niete so miteinander verbunden, dass sie in gegenseitigem Kontakt bleiben. Es ist auch vorgesehen, die beiden Plattenkörper durch einen hochtemperaturbeständigen Kunststoff miteinander zu verbinden. Es besteht weiter auch die Möglichkeit, die im flachen Zustand verpresste Metallplatte zu einem zylindrischen, nahezu geschlossenen Ring oder rohrförmigen Körper zu biegen. Dabei werden zumindest die einander zugekehrten Endkanten der beiden Plattenkörper durch eine Schweißnaht, also stellenweise stoffschlüssig, und/oder durch Niete fest miteinander verbunden, damit die Enden der Metallplatten an diesen Stellen nicht auseinanderklaffen. Problematisch ist, dass bei der so hergestellten Metallplatte zwar für einen optimalen Wärmeübergang vom Heizelement auf die Plattenkörper gesorgt ist, dass jedoch an den einander berührenden Grenzflächen der beiden Plattenkörper unvermeidlich ein Luftspalt vorhanden ist, der in der fertigen Metallplatte die Wärmeleitung von Plattenkörper zu Plattenkörper oder allgemein in Richtung der Dicke der Metallplatte beeinträchtigt. Dabei ist die Wärmeleitung in der angegebenen Richtung ungeachtet dessen beeinträchtigt, ob zwischen den einander gegenüberliegenden Grenzflächen ein Luftspalt vorhanden ist oder die beiden Plattenkörper an ihren Grenzflächen durch hochtemperaturbeständigen Kunststoff miteinander verbunden sind.

Aus dem Dokument DE 24 61 249 A1 ist ein Verfahren zum Befestigen von Verbindungsgliedern mit einem Metallteil aus plastisch verformbarem Material unter Anwendung eines Pressdruckes bekannt. Die Verbindungsglieder bestehen aus einem härteren Material als das Metallteil. Bei Anwendung eines die Fließgrenze des Metallteils übersteigenden Pressdruckes dringen die Verbindungsglieder in das Metallteil so weit ein, dass ihr größter Querschnitt sich im Abstand von der Oberfläche des Metallteils befindet und danach durch weiteres Einwirken des Pressdruckes mittel- oder unmittelbar auf die nächste Umgebung der Eindringstellen unter weiterem Fließen des Materials des Metallteils die Eindringstellen hinter den eingedrungenen Verbindungsgliedern geschlossen oder soweit verkleinert werden, dass die Verbindungsglieder im Metallteil kraftschlüssig verankert sind. Zwischen die Metallteile werden ein oder mehrere Drahtwendeln eingelegt, die aus einem härteren Material bestehen als die Metallteile (z.B. Bleche), die aufeinander gepresst werden. Die Kuppen der Drahtwendeln dringen wechselweise in das Material des einen bzw. des anderen Metallteils ein, wobei der Pressdruck so hoch gewählt wird, dass das Material der Metallteile in den Raum hinter den Kuppen der Drahtwendeln einfließt. Die Drahtwendeln sind um Drähte oder Bänder angeordnet. Diese Maßnahmen dienen dem Zweck, einen Rohrheizkörper in feste und gute wärmeleitende Verbindung mit einer Platte zu bringen, sind aber auch nicht geeignet, einen unvermeidlichen Luftspalt zwischen den beiden Metallteilen und die damit einhergehende Beeinträchtigung der Wärmeleitfähigkeit zwischen den beiden Metallteilen zu verhindern.

Das Dokument EP 0 031 866 B1 betrifft ein Verfahren zur Herstellung einer Heizeinrichtung oder eines Wärmeaustauschelements, um welches ein Draht wendelförmig gewickelt ist, so dass beim Aufpressen die Wendelkuppen in das Material eines Tragbleches eindringen. Der Luftspalt, der sich bei der Anwendung des Verfahrens nach dem vorgenannten Dokument DE 24 61 249 A1 ergibt und die Wärmeleitfähigkeit beeinträchtigt, ergibt sich auch bei Anwendung des Verfahrens nach dem Dokument EP 0 031 866 B1.

Aus dem Dokument DE 10 2007 054 071 B4 ist ein Verfahren zum Herstellen eines streifen- oder plattenförmigen Verbundmetallgegenstands aus wenigstens zwei Schichten aus Aluminium oder einer Aluminiumlegierung bekannt, bei dem als eine der Schichten eine Schicht eingesetzt wird, die auf ihrer einer benachbarten Schicht zugewandten Seite mit streifenförmigen Ausnehmungen versehen ist. In diese Ausnehmungen kann ein rohrförmiger Körper eingelegt werden. Durch Gegeneinanderpressen wird der rohrförmige Körper dann von einer oder mehreren Metallschichten in das Metall eingebettet. Vor oder nach dem Gegeneinanderpressen kann ein weiterer Körper, z.B. ein Heizdraht, in den rohrförmigen Körper eingeführt werden. In diesem Fall ist dann ein Luftspalt zwischen dem Heizdraht und dem rohrförmigen Körper vorhanden. Die Schichten aus Aluminium oder einer Aluminiumlegierung sind zwar, mit Ausnahme der Berührungsstelle zwischen Schichten und Heizelement, durch eine gegenseitige Diffusionsverbindung gesamtflächig stoffschlüssig miteinander verbunden, die Herstellung des streifen- oder plattenförmigen Verbundmetallgegenstands erfordert aber, dass zuvor in wenigstens einer der Schichten die streifenförmigen Ausnehmungen hergestellt werden, welche den rohrförmigen Körper aufnehmen.

Aufgabe der Erfindung ist es, ein Verfahren und eine Metallplatte der eingangs genannten Art so zu verbessern, dass die Metallplatte eine insgesamt bessere Wärmeleitfähigkeit und ein breiteres Anwendungsspektrum hat.

Ausgehend von einem Verfahren der eingangs genannten Art ist diese Aufgabe erfindungsgemäß dadurch gelöst, dass wenigstens zwei Plattenkörper, die auf ihren einander gegenüberliegenden Seiten jeweils wenigstens eine Schicht aus Aluminium oder einer Aluminiumlegierung aufweisen, bei einer Temperatur, die über der Rekristallisationstemperatur des Aluminiums oder der Aluminiumlegierung aber unterhalb des Schmelzpunktes des Aluminiums ist, wärmevorbehandelt und anschließend durch Walzen gegeneinander gepresst werden, um das Einbetten des oder jedes Heizelements in die Plattenkörper und eine Dickenreduktion der Schichten zu bewirken, bei der die Schichten im Bereich ihrer einander berührenden Seiten eine gegenseitige Diffusionsverbindung eingehen und dadurch die Plattenkörper gesamtflächig stoffschlüssig zu der herzustellenden Metallplatte miteinander verbunden werden.

Ausgehend von einer Metallplatte der eingangs genannten Art ist die Aufgabe erfindungsgemäß dadurch gelöst, dass die Plattenkörper auf ihren einander gegenüberliegenden Seiten jeweils wenigstens eine Schicht aus Aluminium oder einer Aluminiumlegierung aufweisen, die, mit Ausnahme der Berührungsstellen zwischen Plattenkörpern und Heizelement(en), durch eine gegenseitige Diffusionsverbindung gesamtflächig stoffschlüssig miteinander verbunden sind.

Die stoffschlüssige Verbindung in der Metallplatte nach der Erfindung verbindet die Plattenkörper auf ihren einander gegenüberliegenden Seiten gesamtflächig, so dass die fertige Metallplatte überhaupt keinen Luftspalt aufweist, der die Wärmeleitfähigkeit beeinträchtigen könnte. Bei Anwendung des erfindungsgemäßen Verfahrens wird das durch die Dickenreduktion der Schichten ermöglicht, die bei der Rekristallisationstemperatur die erwünschte gegenseitige Diffusionsverbindung eingehen, durch die die beiden Plattenkörper in eine einstückige Metallplatte mit eingebettetem Heizelement verwandelt werden.

Bei dem Verfahren nach der Erfindung erfolgt das Gegeneinanderpressen der beiden Plattenkörper, die keine Ausnehmungen für das oder jedes Heizelement aufweisen, durch Walzen. Die Plattenkörper, zwischen die das oder jedes Heizelement eingelegt ist, werden durch einen Walzenspalt hindurchbewegt, in welchem Druckkräfte auf jeden Plattenkörper längs einer Walzlinie einwirken, was zur Folge hat, dass auf das oder jedes Heizelement bei dessen Einbettung in die Plattenkörper nur geringe Kräfte einwirken. Die Fläche, auf der die Walzen überhaupt zur Einwirkung kommen, entspricht höchstens etwa einem Zwölftel des Umfangs jeder den Walzenspalt begrenzenden Walze. Die Fläche, auf der die Plattenkörper mit Druck beaufschlagt werden, ist demgemäß wesentlich geringer als bei dem bekannten Verfahren nach dem eingangs erwähnten Dokument DE 201 08 963 U1, bei dem die Plattenkörper auf ihrer gesamten Fläche mit einer Presskraft beaufschlagt werden.

Die sich durch das erfindungsgemäße Verfahren ergebende Dickenreduktion von wenigstens zwei Schichten aus Aluminium oder einer Aluminiumlegierung, die zu deren gegenseitiger Diffusionsverbindung führt, basiert auf einem bekannten Metallplattierungsverfahren.

Aus dem grundlegenden US-Patent Nr. 2 718 690 A von John B. Ulam aus dem Jahre 1955, das seinerseits auf den Richtung weisenden US-Patenten Nr. 1 392 416 A und 2 468 206 A aus den Jahren 1921 bzw. 1949 aufbaut, ist ein Verfahren bekannt, durch das plattiertes Metall herstellbar ist. Bei diesem bekannten Verfahren wird keine Art von Bindemittel zwischen den einzelnen Metallschichten benutzt, sondern es werden die Molekularstrukturen der Metalle miteinander vereinigt. Die einzelnen Metallschichten werden durch mechanische Bearbeitung gereinigt, um sie an der Oberfläche von jeglichen Oxiden, Verschmutzungen od. dgl. zu befreien. Das ist notwendig, um die molekulare Gitterstruktur des Metalls freizulegen. Dann werden die Metallschichten auf die geeignete Temperatur erhitzt, damit durch Druckbeaufschlagung die benachbarten Oberflächen der Metalle ineinander diffundieren können.

Die Erfindung macht von dem bekannten Verfahren vorteilhaften Gebrauch, um ein Heizelement in eine Metallplatte, die nicht mit Ausnehmungen versehen ist, einzubetten und das Vorhandensein jeglichen Luftspalts in der fertigen Metallplatte zu verhindern.

Vorteilhafte Ausgestaltungen der Erfindung bilden die Gegenstände der Unteransprüche.

In einer Ausgestaltung des Verfahrens nach der Erfindung beträgt die Dickenreduktion der Schichten aus Aluminium oder einer Aluminiumlegierung in Bezug auf die vor dem Gegeneinanderpressen vorhandene Gesamtdicke dieser Schichten höchstens 25 %. Diese Dickenreduktion und die dafür erforderliche Walzkraft sind ausreichend groß, so dass sich eine gegenseitige Diffusionsverbindung der Schichten mit Sicherheit erzielen lässt.

In einer weiteren Ausgestaltung des Verfahrens nach der Erfindung werden die Schichten aus Aluminium oder einer Aluminiumlegierung als Kernschichten zwischen zwei Deckschichten aus anderem Metall wie Stahl, rostfreiem Stahl, Kupfer oder Titan angeordnet. Durch den Einsatz entsprechender Deckschichten lässt sich das Verfahren optimal an den Einsatzzweck der Metallplatte anpassen, beispielsweise hinsichtlich einer korrosionsbeständigen Anwendung, einer hitzebeständigen Anwendung, einer lebensmittelbeständigen Anwendung, einer salzwasserbeständigen Anwendung od. dgl.

In einer weiteren Ausgestaltung des Verfahrens nach der Erfindung wird die Metallplatte in einen Zustand versetzt, in dem sie durch mechanische Umformung weiterverarbeitbar ist. Dadurch lassen sich mit der Metallplatte z.B. unterschiedlich geformte Heizplatten herstellen, ohne dass die Funktionstüchtigkeit des oder jedes Heizelements beeinträchtigt wird.

In einer weiteren Ausgestaltung des Verfahrens nach der Erfindung wird wenigstens eine Reihe von gesonderten Heizelementen in die Plattenkörper eingebettet. Dadurch lassen sich lange Metallplatten mit einer Vielzahl von hintereinander angeordneten gesonderten Heizelementen oder mit einem über der Länge der Metallplatte durchgehenden Heizelement in einem kontinuierlichen Walzverfahren herstellen.

In einer weiteren Ausgestaltung des Verfahrens nach der Erfindung wird zusätzlich mindestens ein Temperatursensor pro Heizelement mit in die Plattenkörper eingebettet. Das erleichtert später die Temperatursteuerung der erfindungsgemäßen Metallplatte, wenn diese z.B. als Heizplatte eingesetzt wird.

In einer weiteren Ausgestaltung des Verfahrens nach der Erfindung wird als das oder jedes Heizelement ein Rohrheizkörper eingesetzt, bei dem wenigstens ein Heizleiter in einen von einem rohrförmigen Metallmantel umschlossenen mineralischen Kern eingebettet ist, so dass zwischen Heizelement und Heizkörperrohr kein Luftspalt vorhanden ist. In dieser Ausgestaltung sind die elektrische Isolation des Heizleiters und ein guter Wärmeübergang zu dem Rohr auf Dauer gewährleistet und Kurzschlüsse innerhalb der Metallplatte ausgeschlossen. Darüber hinaus werden auch Kurzschlüsse zwischen mehreren in den rohrförmigen Metallmantel eingebetteten Heizleitern vermieden, also auch deren gegenseitige elektrische Isolation auf Dauer gewährleistet.

In einer weiteren Ausgestaltung des Verfahrens nach der Erfindung wird bei oder nach dem Walzen eine Nut in einen der Plattenkörper eingearbeitet, um wenigstens ein Heizelement von einem vorhandenen benachbarten Heizelement thermisch zu trennen. So lassen sich auf einfache Weise viele Heizelemente in eine Metallplatte in einem kontinuierlichen Walzverfahren einbetten. Wenn die fertige Metallplatte dann in einzelne Heizelementgruppen zerschnitten wird, sind innerhalb jeder Heizelementgruppe die Heizelemente thermisch voneinander getrennt. Eine solche Heizelementgruppe kann z.B. ein Ceranfeld ersetzen, das bislang in einzelnen Feldern induktiv oder mit Strahlungsheizkörpern beheizt wird. Zweckmäßig wird in diesem Fall die Metallplatte zumindest an der Oberseite eine Deckschicht aus rostfreiem Stahl haben und die Nut wird bis in die Nähe der Unterseite dieser Deckschicht oder bis an die Unterseite derselben reichen. Hier wird von einem Aufbau Gebrauch gemacht, wie er bei einer Kühl- und Heizplatte aus dem Dokument EP 1 553 863 B8 bekannt ist.

In einer weiteren Ausgestaltung des Verfahrens nach der Erfindung wird das oder jedes Heizelement spiral- oder mäanderförmig gewunden zwischen den Plattenkörpern angeordnet. Auch so lassen sich einzelne Heizplatten leicht herstellen und leicht elektrisch anschließen. Bevorzugt würden hier Heizelemente eingesetzt, in denen wenigstens zwei Heizleiter eingebettet sind. Der Mäander oder die Spirale des Heizelements kann so innerhalb der Metallplatte einfach enden.

In einer weiteren Ausgestaltung des Verfahrens nach der Erfindung wird in Bezug auf die Dicke der Metallplatte das oder jedes Heizelement außermittig eingebettet. Das hat den Vorteil, dass das oder jedes Heizelement näher zu der (den) Oberfläche(n) eingebettet wird, an der (denen) die Wärme benötigt wird. Dadurch wird die Wärme unmittelbar unter der (den) Oberfläche(n) erzeugt, wo sie benötigt wird. Bei einer Heizplatte können das beide Oberflächen sein, die Wärme abstrahlen sollen. Hierfür eignet sich die Anordnung der Heizelemente in der Metallplatte in wenigstens zwei außermittigen Schichten. Dadurch lässt sich die Heizleistung vervielfachen. Bei einem Grill wird es die Oberfläche sein, die Wärme zum Grillen abstrahlen soll. Auch unter dieser Oberfläche können aber zwei oder mehr als zwei Schichten von Heizelementen in der Metallplatte außermittig angeordnet werden, um die Grillheizleistung zu steigern. Das lässt sich bei dem kontinuierlichen Walzverfahren nach der Erfindung auf einfache Weise dadurch erreichen, dass die Heizelemente in Bezug auf die Dicke der Metallplatte nicht in der Mitte eingewalzt werden.

In einer weiteren Ausgestaltung des Verfahrens nach der Erfindung wird als die oder jede Schicht aus Aluminium oder einer Aluminiumlegierung eine auf ein anderes Metall mit einer besseren Wärmeleitfähigkeit als Aluminium aufgebrachte Plattierungsschicht aus Aluminium oder einer Aluminiumlegierung eingesetzt. Das andere Metall ist beispielsweise Kupfer. In dieser Ausgestaltung wird die gute Verbindbarkeit von Schichten aus Aluminium oder einer Aluminiumlegierung mit Hilfe einer Diffusionsverbindung und zugleich die bessere Wärmeleitfähigkeit des anderen Metalls ausgenutzt, um die Leistungsfähigkeit der Metallplatte bei ihrem Einsatz als Heizplatte zu verbessern.

In einer Ausgestaltung der Metallplatte nach der Erfindung sind die Schichten aus Aluminium oder einer Aluminiumlegierung als Kernschichten zwischen zwei Deckschichten aus anderem Metall wie Stahl, rostfreiem Stahl, Kupfer oder Titan angeordnet. Durch den Einsatz entsprechender Deckschichten lässt sich die Metallplatte optimal an den Einsatzzweck anpassen, beispielsweise, wie oben bereits erwähnt, hinsichtlich einer korrosionsbeständigen Anwendung, einer hitzebeständigen Anwendung, einer lebensmittelbeständigen Anwendung, einer salzwasserbeständigen Anwendung od. dgl.

In einer weiteren Ausgestaltung der Metallplatte nach der Erfindung ist die Metallplatte durch eine Wärmenachbehandlung in einen Zustand versetzt, in dem sie durch mechanische Umformung weiterverarbeitbar ist. Dadurch lassen sich, wie oben ebenfalls bereits erwähnt, mit der Metallplatte z.B. unterschiedlich geformte Heizplatten herstellen, ohne dass die Funktionstüchtigkeit des oder jedes Heizelements beeinträchtigt wird.

In einer weiteren Ausgestaltung der Metallplatte nach der Erfindung ist die Metallplatte als ein Walzprodukt hergestellt. Ein solches Walzprodukt lässt sich in einem kontinuierlichen Walzverfahren herstellen. Die Metallplatte kann eine beliebige Anzahl von hintereinander angeordneten Heizelementen oder ein durchgehendes langes Heizelement enthalten, je nach Bedarf. Es lassen sich so gleiche Heizelemente herstellen, wobei lediglich die als Walzprodukt hergestellte Metallplatte anschließend entsprechend zugeschnitten zu werden braucht.

In einer weiteren Ausgestaltung der Metallplatte nach der Erfindung ist das Heizelement wenigstens ein mit einer elektrischen Isolierung versehener Metalldraht. Diese Ausbildung des Heizelements ist am einfachsten zu realisieren, wenn eine elektrische Isolierung auf einem Metalldraht vorhanden ist, die die Wärme- und Druckbelastung bei dem Herstellen der erfindungsgemäßen Metallplatte aushält.

In einer weiteren Ausgestaltung der Metallplatte nach der Erfindung besteht das Heizelement aus einem Rohrheizkörper, bei dem wenigstens ein Heizleiter in einen von einem rohrförmigen Metallmantel umschlossenen mineralischen Kern eingebettet ist. Die einfachste heute bekannte Form eines entsprechenden Heizelements ist ein solcher Rohrheizkörper aus einem rohrförmigen Metallmantel, der einen mineralischen Kern enthält, in welchem wenigstens ein Heizleiter eingebettet ist. Ebenso lassen sich in diesen mineralischen Kern zwei oder noch mehr Heizleiter in gegenseitigem Abstand einbetten. Der Gesamtaufbau des Rohrheizkörpers ist so gestaltet, dass dieser wie ein Draht auf Rollen gewickelt und transportiert werden kann. Ein üblicher Durchmesser eines solchen Rohrheizkörpers liegt in der Größenordnung von 3 mm, wobei aber noch kleinere und auch größere Abmessungen denkbar sind.

In einer weiteren Ausgestaltung der Metallplatte nach der Erfindung ist wenigstens eine Reihe von gesonderten Heizelementen in die Plattenkörper eingebettet. So kann beispielsweise eine streifenförmige Metallplatte hergestellt werden, die einfach in einzelne Heizplatten oder in Gruppen einzelner Heizplatten, wie oben bereits erwähnt, zerschnitten werden kann.

In einer weiteren Ausgestaltung der Metallplatte nach der Erfindung ist mindestens ein Temperatursensor pro Heizelement mit in die Metallplatte eingebettet. Das erleichtert, wie oben ebenfalls bereits erwähnt, die Temperatursteuerung, wenn die Metallplatte als eine Heizplatte eingesetzt wird.

In einer weiteren Ausgestaltung der Heizplatte nach der Erfindung ist wenigstens ein Heizelement von einem vorhandenen benachbarten Heizelement durch eine in die Metallplatte eingearbeitete Nut thermisch getrennt. Auf diese Weise lässt sich, wie oben ebenfalls bereits erwähnt, ein Ceranfeld mit mehreren Heizflächen durch eine Metallplatte nach der Erfindung ersetzen, in welcher verschiedene Heizflächen definiert sind, die jeweils wenigstens ein Heizelement umfassen und von den Heizelementen von benachbarten Heizflächen durch Nuten thermisch getrennt sind.

In einer weiteren Ausgestaltung der Metallplatte nach der Erfindung ist das oder jedes Heizelement spiral- oder mäanderförmig gewunden in die Metallplatte eingebettet. In dieser Ausgestaltung lässt sich die Form des Heizelements entsprechend dem Einsatzzweck der Metallplatte wählen.

In einer weiteren Ausgestaltung der Metallplatte nach der Erfindung ist in Bezug auf die Dicke der Metallplatte das oder jedes Heizelement außermittig eingebettet. Das ermöglicht, diejenige Oberfläche der Metallplatte, an welcher Wärme benötigt wird, stärker zu beheizen als die entgegengesetzte Oberfläche.

In einer weiteren Ausgestaltung der Metallplatte nach der Erfindung ist die oder jede Schicht aus Aluminium oder einer Aluminiumlegierung eine auf ein anderes Metall mit einer besseren Wärmeleitfähigkeit als Aluminium aufgebrachte Plattierungsschicht. Dadurch lässt sich die gute Diffusionsverbindbarkeit von Aluminium mit der besseren Wärmeleitfähigkeit eines anderen Metalls, wie beispielshalber Kupfer, kombinieren, wie oben bereits dargelegt.

Ausführungsbeispiele der Erfindung werden im Folgenden unter Bezugnahme auf die Zeichnungen näher beschrieben. Es zeigt
- Fig. 1: in einer Schnittansicht, wie zwei Plattenkörper unter Dickenreduktion zu einer Metallplatte nach der Erfindung mit eingebettetem Heizelement gewalzt werden,
- Fig. 1A: in einer gleichen Ansicht wie in Fig. 1 das Walzen von zwei Plattenkörpern, die auf ihren inneren und äußeren Flächen jeweils mit einer Plattierungsschicht versehen sind,
- Fig. 2: in einer gleichen Ansicht wie in Fig. 1 das Walzen von zwei Plattenkörpern, die auf ihren äußeren Flächen aber jeweils mit einer metallischen Deckschicht versehen sind,
- Fig. 3: in einer gleichen Ansicht wie in Fig. 1 einen Walzvorgang, in welchem zwei Plattenkörper unterschiedlicher Dicke zu einer Metallplatte gewalzt werden,
- Fig. 3A: in einer gleichen Ansicht wie in Fig. 1 einen Walzvorgang, in welchem drei Plattenkörper zu einer Metallplatte gewalzt werden,
- Fig. 4: einen Teil einer Metallplatte mit einem eingewalzten Heizelement, wobei ein Temperatursensor mit in die Metallplatte eingebettet ist,
- Fig. 5: im Querschnitt ein Heizelement, das aus einem Rohrheizkörper besteht, bei dem ein Heizleiter in einen von einem rohrförmigen Metallmantel umschlossenen mineralischen Kern eingebettet ist,
- Fig. 6: eine Metallplatte nach der Erfindung, in die ein spiralförmig gewundenes Heizelement eingebettet ist,
- Fig. 7: im Querschnitt ein Heizelement, das aus einem Rohrheizkörper besteht, bei dem zwei Heizleiter in einen von einem rohrförmigen Metallmantel umschlossenen mineralischen Kern eingebettet sind, und
- Fig. 8: einen Teil einer Metallplatte nach der Erfindung, in den vier Heizelemente eingebettet und von einem jeweils benachbarten Heizelement durch eine in die Metallplatte eingearbeitete Nut thermisch getrennt sind, wobei die Nut zusätzlich als eine Einzelheit in größerem Maßstab dargestellt ist.

Die Erfindung betrifft das Herstellen einer Metallplatte mit mindestens einem eingebetteten Heizelement, die eine insgesamt bessere Wärmeleitfähigkeit und ein breiteres Anwendungsspektrum hat. Die bei der Herstellung der Metallplatte auszuführenden Schritte, die mit denen der eingangs beschriebenen bekannten Verfahren nach den eingangs erwähnten US-Patentschriften übereinstimmen, wie Reinigen der Metalloberflächen, Wärmevorbehandeln der Plattenkörper und Walzen derselben zur Erzielung einer gegenseitigen Diffusionsverbindung und gegebenenfalls eine Wärmenachbehandlung, werden hier nicht im Einzelnen beschrieben. Es sei aber festgehalten, dass, wenn durch das Verfahren nach der Erfindung Plattenkörper aus Aluminium miteinander verbunden werden, die Oberflächen von jeder Aluminiumschicht vor dem Gegeneinanderpressen auf eine Temperatur erhitzt werden, die über der Rekristallisationstemperatur des Aluminiums liegt, aber unterhalb des Schmelzpunktes des Aluminiums. Abschließend wird die Metallplatte geglüht, wonach sie dann weiterverarbeitet und dabei weiter umgeformt werden kann. Dafür sei zusätzlich auf die US-Patente Nr. 3 261 724, 3 210 840 und 3 350 772 verwiesen, welche sich mit Walzverfahren zum Plattieren von Aluminium mit rostfreiem Stahl befassen.

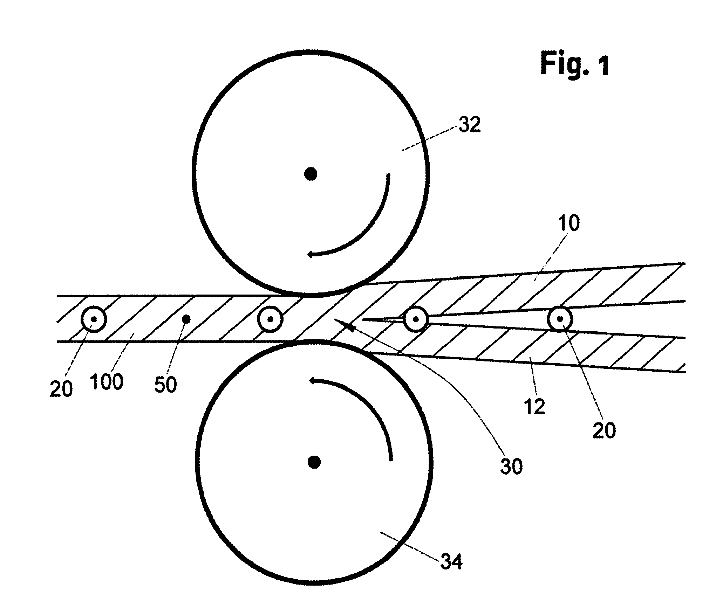

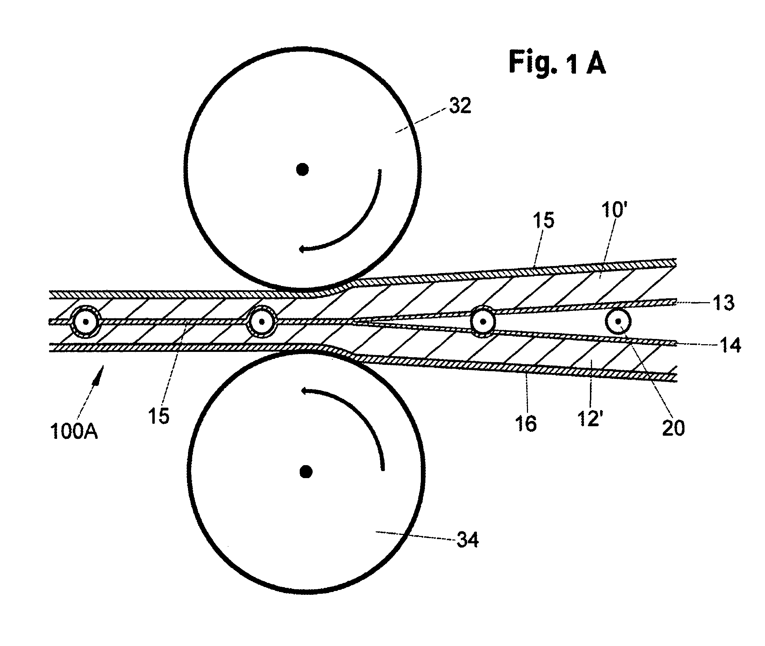

Fig. 1 zeigt in einer Schnittansicht, wie zwei Plattenkörper 10, 12 unter Dickenreduktion zu einer Metallplatte 100 nach der Erfindung mit einem eingebetteten Heizelement 20 und zusätzlich einem eingebetteten Temperatursensor 50 gewalzt werden. Das Walzen geschieht in einem Walzenspalt 30 zwischen zwei Walzen 32, 34 eines sonst nicht weiter dargestellten Walzwerks.

In dem Ausführungsbeispiel nach Fig. 1 bestehen die Plattenkörper 10, 12 aus Aluminium oder einer Aluminiumlegierung. Es ist ausreichend, wenn die Plattenkörper 10, 12 wenigstens auf ihren einander gegenüberliegenden Seiten, die in Fig. 1 rechts von dem Walzenspalt 30 zu erkennen sind, eine Schicht aus Aluminium oder einer Aluminiumlegierung aufweisen. Der übrige Teil der Plattenkörper 10, 12 könnte aus anderem Metall bestehen, wie es bei anderen Ausführungsformen der Metallplatte nach der Erfindung der Fall ist, die weiter unten beschrieben sind.

Fig. 1 A zeigt in einer gleichen Ansicht wie in Fig. 1 das Walzen von zwei Plattenkörpern 10', 12', die auf ihren inneren und äußeren Flächen jeweils mit einer Plattierungsschicht 13, 14 bzw. 15, 16 versehen sind. Bei diesem Ausführungsbeispiel der Erfindung sind die beiden Plattenkörper 10, 12 durch die Plattenkörper 10' bzw. 12' ersetzt, welche auf ihren einander gegenüberliegenden Seiten die Schicht 13 bzw. 14 aus Aluminium oder einer Aluminiumlegierung aufweisen, die jeweils als eine Plattierungsschicht aus Aluminium oder einer Aluminiumlegierung auf ein anderes Metall mit einer besseren Wärmeleitfähigkeit als Aluminium aufgebracht sind. Dieses andere Metall kann zum Beispiel Kupfer sein. In Fig. 1A ist zu erkennen, dass die Plattenkörper 10' und 12' außen jeweils mit einer Deckschicht 15 bzw. 16 versehen sind. Die Deckschichten 15, 16 können zwar Plattierungsschichten aus Aluminium oder einer Aluminiumlegierung wie die beiden inneren Plattierungsschichten 13 und 14 sein, es kann sich jedoch statt dessen um zwei Deckschichten aus einem anderen Metall wie Stahl, rostfreier Stahl oder Titan handeln. Wenn die den Plattierungsschichten 13 und 14 benachbarten Kernschichten der Plattenkörper 10', 12' nicht aus Kupfer bestehen, können die beiden Deckschichten 15 und 16 jeweils aus Kupfer bestehen

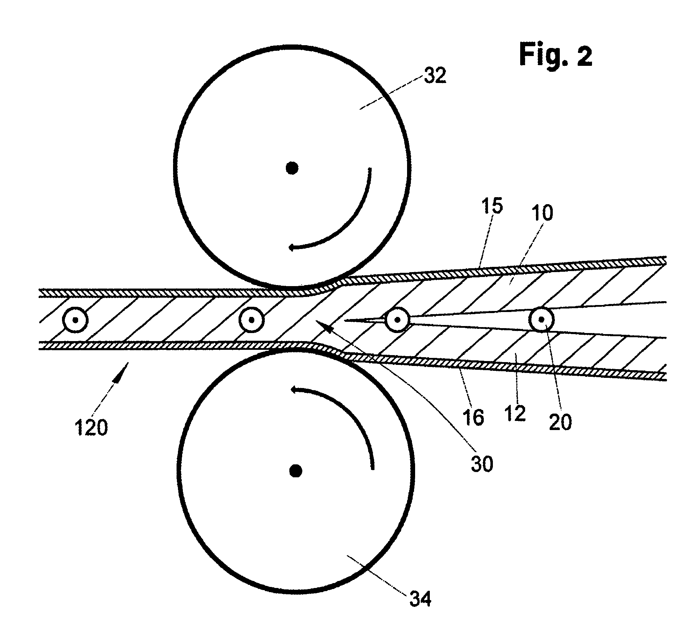

Fig. 2 zeigt in einer gleichen Ansicht wie in Fig. 1 das Walzen von zwei Plattenkörpern 10, 12, die auf ihren äußeren Flächen aber jeweils mit einer metallischen Deckschicht 15 bzw. 16 versehen sind. Bei diesem Ausführungsbeispiel der Erfindung weisen die beiden Plattenkörper 10, 12 auf ihren einander zugewandten inneren Seiten keine Plattierungsschicht auf, sondern sind nur außen mit den Deckschichten 15, 16 versehen. In diesem Ausführungsbeispiel sind die Schichten aus Aluminium oder einer Aluminiumlegierung, welche die Plattenkörper 10, 12 bilden, als Kernschichten zwischen den beiden Deckschichten 15, 16 aus anderem Metall wie Stahl, rostfreiem Stahl, Kupfer oder Titan angeordnet.

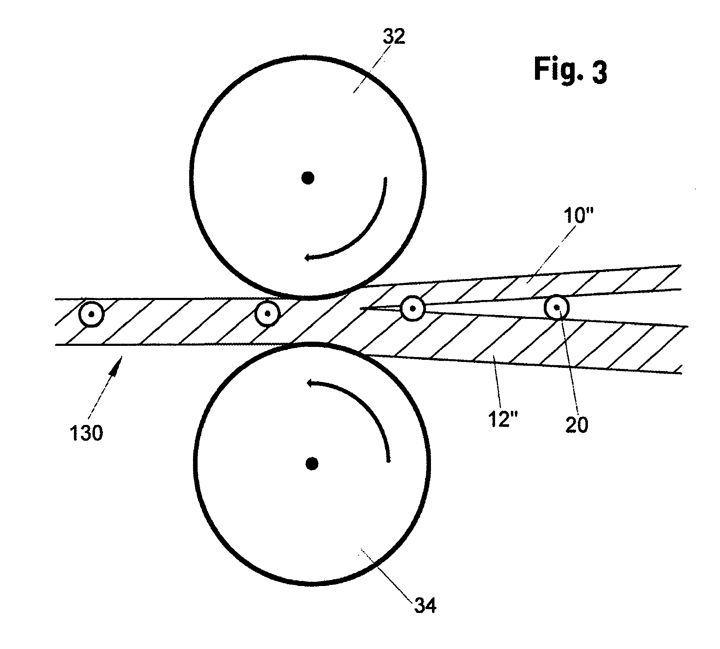

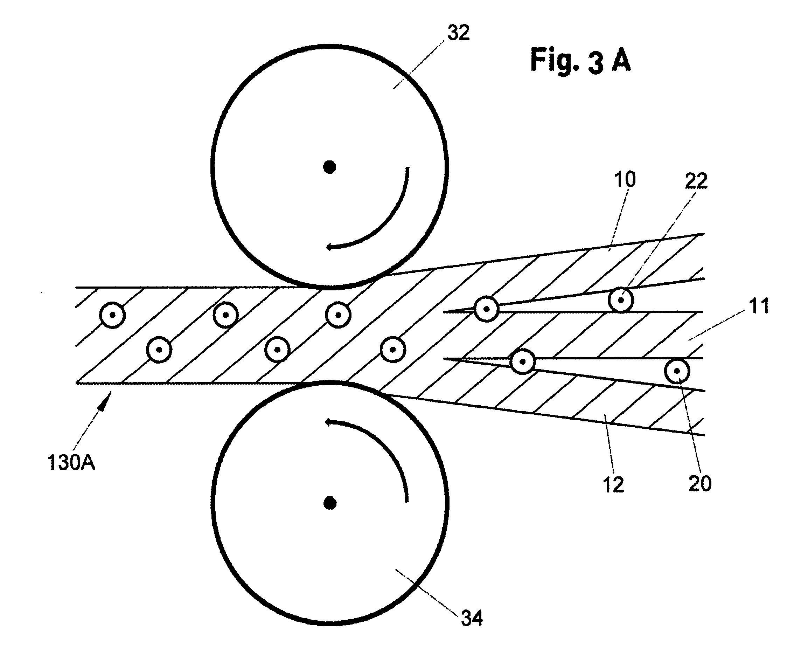

Fig. 3 zeigt in einer gleichen Ansicht wie in Fig. 1 einen Walzvorgang, in welchem zwei Plattenkörper 10", 12" unterschiedlicher Dicke zu einer Metallplatte 130 gewalzt werden. Fig. 3A zeigt in einer gleichen Ansicht wie in Fig. 1 einen Walzvorgang, in welchem drei Plattenkörper 10, 11, 12 zu einer Metallplatte 130A gewalzt werden.

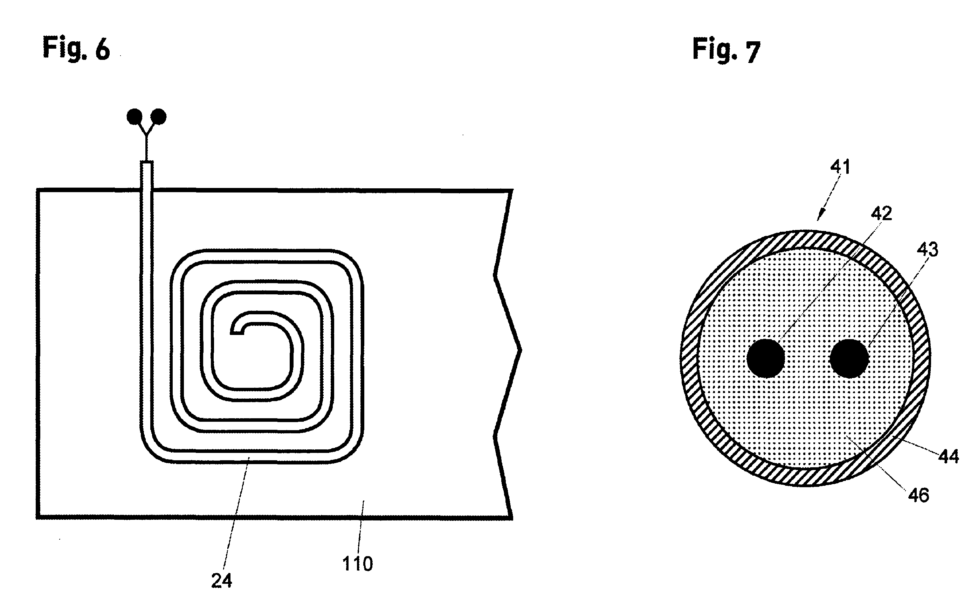

Das Verfahren, durch welches die Plattenkörper 10, 12 zu einer Metallplatte 100 (Fig. 1) oder 100A (Fig. 1 A) oder 110 (Fig. 6) oder 120 (Fig. 2) oder 130 (Fig. 3) oder 130A (Fig. 3A) gewalzt werden, ist weiter unten beschrieben. Die Beschreibung hier beschränkt sich daher auf die Ausbildung der Plattenkörper in deren Zustand, in welchem sie sich in der Darstellung in den Fig. 1 bis 3A rechts von dem Walzenspalt 30 befinden.

Zwischen den Plattenkörpern 10, 12 oder 10', 12' oder 10", 12" oder 10, 11 und 12 ist jeweils mindestens ein Heizelement 20 (Fig. 1, 1 A, 2, 3 und 3A) in einer Ebene angeordnet oder es sind wenigstens zwei Heizelemente 20, 22 in zwei Ebenen übereinander angeordnet (Fig. 3A).

In der fertigen Metallplatte 100, 100A, 110, 120, 130, 130A, die sich in der Darstellung in den Fig. 1 bis 3 links von dem Walzenspalt 30 erstreckt, weisen die Plattenkörper auf ihren einander gegenüberliegenden Seiten jeweils wenigstens eine Schicht 15 aus Aluminium oder einer Aluminiumlegierung auf, die, mit Ausnahme der Berührungsstellen zwischen Plattenkörpern und Heizelementen 20, 22, 24, durch eine gegenseitige Diffusionsverbindung gesamtflächig stoffschlüssig miteinander verbunden sind, wie es bei den Ausführungsbeispielen nach den Fig. 1, 2, 3 und 3A der Fall ist, in denen die Schicht 15 allerdings nicht zu erkennen ist, weil das gesamte Material der Metallplatte aus Aluminium oder einer Aluminiumlegierung besteht. Die Schicht 15 ist hingegen in Fig. 1 A zu erkennen, da sie aus den beiden Plattierungsschichten 13, 14 aus Aluminium oder einer Aluminiumlegierung hervorgegangen ist, welchen ein anderes Metall wie zum Beispiel Kupfer benachbart ist.

Das Herstellen der Diffusionsverbindung wird zusammen mit dem Verfahren näher beschrieben. Die Metallplatten 100, 100A, 110, 120, 130 und 130A, die gemäß vorstehender Beschreibung als ein Walzprodukt hergestellt worden sind, werden durch eine Wärmenachbehandlung in einen Zustand versetzt, in dem sie durch mechanische Umformung weiter verarbeitbar sind.

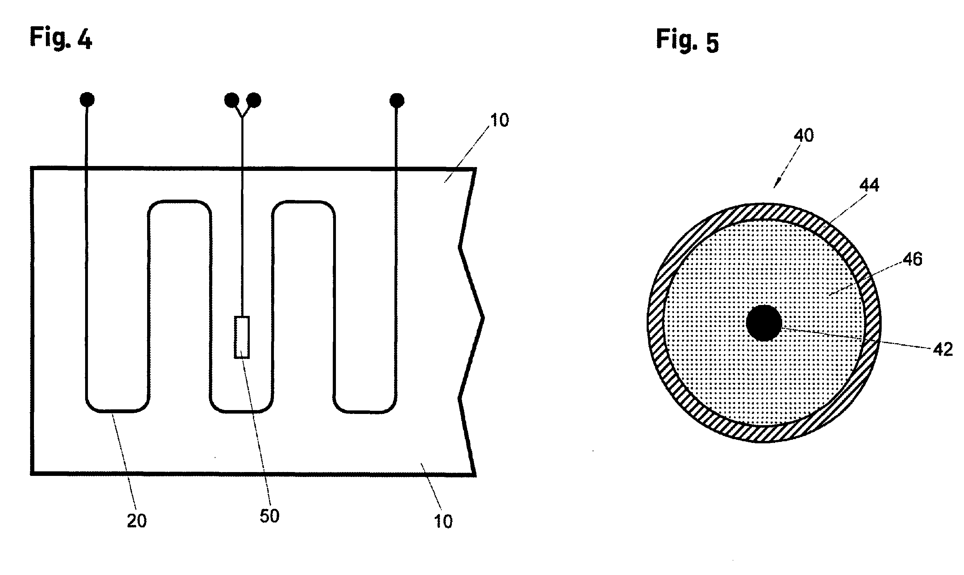

Die Heizelemente 20, 22 sind jeweils wenigstens ein mit einer elektrischen Isolierung versehener Metalldraht (nicht dargestellt) oder jedes Heizelement besteht aus einem Rohrheizkörper 40, bei dem wenigstens ein Heizleiter 42 in einen von einem rohrförmigen Metallmantel 44 umschlossenen mineralischen Kern 46 eingebettet ist, wie es in Fig. 5 gezeigt ist. Statt eines Heizleiters 42 können auch zwei Heizleiter 42 und 43 in dem Rohrheizkörper 40 in den mineralischen Kern 46 eingebettet sein, wie es in den Fig. 6 und 7 gezeigt ist. Fig. 6 zeigt eine Metallplatte 110, in die ein spiralförmig gewundenes Heizelement 24 eingebettet ist.

In dem Ausführungsbeispiel nach Fig. 2 kann der Rohrheizkörper 40 einen Außendurchmesser von 3,2 mm haben und die fertige Metallplatte 120 eine Dicke von 10 mm. Dabei haben die beiden Deckschichten 15, 16 jeweils eine Dicke von 1 mm. Jeder Plattenkörper 10, 12 kann einschließlich seiner Deckschicht 15 bzw. 16 vor dem Walzvorgang eine Dicke von beispielshalber 7 mm haben. Wenn die Walzen 32, 34 einen Durchmesser von jeweils 300 mm haben, so berührt jede Walze die Plattenkörper 10, 12 etwa auf einem Zwölftel ihres Umfangs.

Das Verfahren nach der Erfindung zum Herstellen einer Metallplatte mit mindestens einem eingebetteten Heizelement wird nun unter Bezugnahme auf Fig. 1 näher beschrieben.

In einem ersten Schritt wird mindestens ein Heizelement 20 (oder 24) zwischen wenigstens zwei Plattenkörpern 10, 12 angeordnet, die nicht (wie im Stand der Technik nach dem Dokument DE 10 2007 054 071 B4) mit Ausnehmungen zur Aufnahme des oder jedes Heizelements 20 versehen sind. In einem zweiten Schritt wird das oder jedes Heizelement 20 (oder 24) unmittelbar kontaktierend in wenigstens zwei Plattenkörper, nämlich in Fig. 1 in die Plattenkörper 10, 12 durch Zusammenpressen und Materialverdrängung der Plattenkörper eingebettet. In einem dritten Schritt werden die beiden Plattenkörper 10, 12 stoffschlüssig miteinander verbunden. Die wenigstens zwei Plattenkörper 10, 12, die auf ihren einander gegenüberliegenden Seiten jeweils wenigstens eine Schicht aus Aluminium oder einer Aluminiumlegierung aufweisen (in dem Ausführungsbeispiel nach Fig. 1 bestehen sie jeweils nur aus Aluminium oder einer Aluminiumlegierung), werden bei einer Temperatur, die wenigstens gleich der Rekristallisationstemperatur des Aluminiums oder der Aluminiumlegierung ist, wärmevorbehandelt und anschließend durch Walzen gegeneinander gepresst, um das Einbetten des oder jedes Heizelements 20 (oder 24) in die Plattenkörper 10, 12 und eine Dickenreduktion der Schichten zu bewirken, bei der die Schichten im Bereich ihrer einander berührenden Seiten eine gegenseitige Diffusionsverbindung eingehen und dadurch die Plattenkörper 10, 12 gesamtflächig stoffschlüssig zu der herzustellenden Metallplatte 100 (oder 110, Fig. 6) miteinander verbunden werden. Die Dickenreduktion erfolgt durch entsprechendes Einstellen des Walzenspalts 30. Die Dickenreduktion der Schichten aus Aluminium oder einer Aluminiumlegierung soll in Bezug auf die vor dem Gegeneinanderpressen vorhandene Gesamtdicke (in Fig. 1 rechts von den Walzen 32, 34) höchstens 25 % betragen. Es kann dabei wenigstens eine Reihe von gesonderten Heizelementen 20 (oder 24) in die Plattenkörper eingebettet werden, also in einer einzelnen Ebene, wie es bei den Ausführungsbeispielen nach den Fig. 1, 1 A, 2 und 3 der Fall ist. Zusätzlich kann mindestens ein Temperatursensor 50 pro Heizelement gleichzeitig in die Plattenkörper wie zum Beispiel 10, 12 oder 10', 12' eingebettet werden, wie es in Fig. 4 gezeigt ist. Jedes Heizelement wird wie zum Beispiel das Heizelement 20 mäanderförmig gewunden wie in Fig. 4 oder wie das Heizelement 24 spiralförmig gewunden wie in Fig. 6 zwischen den Plattenkörpern wie zum Beispiel den Plattenkörpern 10, 12 in Fig. 1 angeordnet. Wenn die Plattenkörper 10, 12 durch den Walzenspalt 30 hindurchbewegt werden, wird das Heizelement 20 (oder 24) in die Plattenkörper 10, 12 unter Materialverdrängung der Plattenkörper 10, 12 eingebettet, wie es zum Beispiel in Fig. 1 links von dem Walzenspalt 30 im Ergebnis zu erkennen ist. Mäanderförmig gewundene Heizelemente 20 und spiralförmig gewundene Heizelemente 24 können auch gemeinsam in eine Metallplatte eingebettet sein (nicht dargestellt).

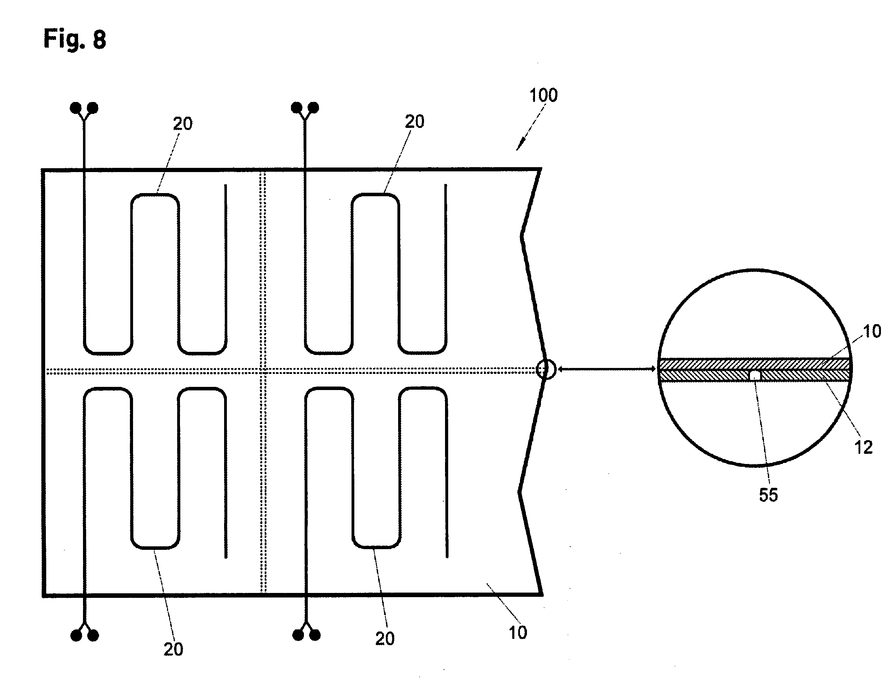

Fig. 8 zeigt einen Teil einer Metallplatte 100, in den vier Heizelemente 20 eingebettet und von einem jeweils benachbarten Heizelement 20 durch eine in die Metallplatte eingearbeitete Nut 55 thermisch getrennt sind. Die Nut 55 ist zusätzlich als eine Einzelheit in größerem Maßstab in Fig. 8 gezeigt. Die Heizelemente 20 sind in zwei Reihen in die Plattenkörper 10, 12 in einer Ebene eingebettet, wie es in Fig. 8 zu erkennen ist. Nach dem Walzen wird die Nut 55 in den Plattenkörper 12 eingearbeitet.

Durch Anwendung des erfindungsgemäßen Verfahrens kann in Bezug auf die Dicke der Metallplatte 100 (oder von jeder anderen der hier beschriebenen Metallplatten) das oder jedes Heizelement 20 außermittig eingebettet werden. Gemäß der Darstellung in Fig. 3 können zu diesem Zweck zwei unterschiedlich dicke Plattenkörper 10", 12" verwendet werden, so dass das Heizelement 20 automatisch in einer Ebene zu liegen kommt, die in Bezug auf die Dicke der Metallplatte 130 außermittig angeordnet ist.

Das außermittige Anordnen der Heizelemente kann in mehr als einer Ebene erfolgen, zum Beispiel in zwei außermittigen Ebenen wie in dem Ausführungsbeispiel nach Fig. 3A. Dort werden drei Plattenkörper 10, 11 und 12 etwa gleicher Dicke eingesetzt. Zwischen den einander gegenüberliegenden Seiten dieser Plattenkörper werden Heizelemente 20 bzw. 22 angeordnet. In der fertigen Metallplatte 130A befinden sich die Heizelemente 20 in einer außermittigen Ebene, die näher bei der unteren Oberfläche der Metallplatte 130A angeordnet ist, und die Heizelemente 22 befinden sich in einer außermittigen Ebene, die näher bei der oberen Oberfläche der Metallplatte 130A angeordnet ist.

In dem Ausführungsbeispiel nach Fig. 3A werden zwar drei Plattenkörper 10, 11 und 12 von in etwas gleicher Dicke eingesetzt, es können jedoch mehr als drei Plattenkörper eingesetzt werden und grundsätzlich können die Plattenkörper von unterschiedlicher Dicke sein.

Beispielshalber die fertige Metallplatte 100 ist aus den beiden Plattenkörpem 10, 12 hergestellt, die auf ihren einander benachbarten Seiten ebene, nicht mit Ausnehmungen versehene Flächen haben. In die Plattenkörper 10, 12 wird das Heizelement 20 (und/oder 24) allein durch Materialverdrängung eingebettet. Die Plattenkörper weisen wenigstens auf ihren einander gegenüberliegenden Seiten jeweils wenigstens eine Schicht aus Aluminium oder einer Aluminiumlegierung auf, wie zum Beispiel die Plattierungsschichten 13, 14 nach Fig. 1A, die, mit Ausnahme der Berührungsstellen zwischen den Plattenkörpern 10, 12 oder 10', 12' und den Heizelementen 20 in der fertigen Metallplatte 100 bzw. 100A gesamtflächig stoffschlüssig miteinander verbunden sind.

**Bezugszeichenliste**

| | |
|---|---|
| 10, 10', 10" | Plattenkörper |
| 11 | Plattenkörper |
| 12, 12', 12" | Plattenkörper |
| 13 | Plattierungsschicht |
| 14 | Plattierungsschicht |
| 15 | Deckschicht |
| 16 | Deckschicht |
| 20 | Heizelement |
| 22 | Heizelement |
| 24 | Heizelement |
| 30 | Walzenspalt |
| 32 | Walze |
| 34 | Walze |
| 40 | Rohrheizkörper |
| 41 | Rohrheizkörper |
| 42 | Heizleiter |
| 43 | Heizleiter |
| 44 | Metallmantel |
| 46 | Kern |
| 50 | Temperatursensor |
| 55 | Nut |
| 100 | Metallplatte |
| 100A | Metallplatte |
| 110 | Metallplatte |
| 120 | Metallplatte |
| 130 | Metallplatte |
| 130A | Metallplatte |

## Patentansprüche

1. Verfahren zum Herstellen einer Metallplatte mit mindestens einem eingebetteten Heizelement durch folgende Schritte:
a) Anordnen von mindestens einem Heizelement (20; 24) zwischen wenigstens zwei Plattenkörpern (10, 12), die nicht mit Ausnehmungen zur Aufnahme des oder jedes Heizelements (20; 24) versehen sind,
b) Einbetten des oder jedes Heizelements (20; 24) unmittelbar kontaktierend in wenigstens zwei Plattenkörper (10, 12) durch Zusammenpressen und Materialverdrängung der Plattenkörper (10, 12) und
c) wenigstens stellenweises stoffschlüssiges Miteinanderverbinden der Plattenkörper (10, 12),
**dadurch gekennzeichnet, dass** wenigstens zwei Plattenkörper (10, 12), die auf ihren einander gegenüberliegenden Seiten jeweils wenigstens eine Schicht aus Aluminium oder einer Aluminiumlegierung aufweisen, bei einer Temperatur, die über der Rekristallisationstemperatur des Aluminiums oder der Aluminiumlegierung aber unterhalb des Schmelzpunktes des Aluminiums ist wärmevorbehandelt und anschließend durch Walzen gegeneinander gepresst werden, um das Einbetten des oder jedes Heizelements (20; 24) in die Plattenkörper (10, 12) und eine Dickenreduktion der Schichten zu bewirken, bei der die Schichten im Bereich ihrer einander berührenden Seiten eine gegenseitige Diffusionsverbindung eingehen und dadurch die Plattenkörper (10, 12) gesamtflächig stoffschlüssig zu der herzustellenden Metallplatte (100) miteinander verbunden werden.

2. Verfahren nach Anspruch 1, **dadurch gekennzeichnet, dass** die Dickenreduktion der Schichten aus Aluminium oder einer Aluminiumlegierung in Bezug auf die vor dem Gegeneinanderpressen vorhandene Gesamtdicke dieser Schichten höchstens 25% beträgt.

3. Verfahren nach Anspruch 1 oder 2, **dadurch gekennzeichnet, dass** die Schichten aus Aluminium oder einer Aluminiumlegierung als Kernschichten zwischen zwei Deckschichten (15, 16) aus anderem Metall wie Stahl, rostfreiem Stahl, Kupfer oder Titan angeordnet werden.

4. Verfahren nach einem der vorhergehenden Ansprüche, **dadurch gekennzeichnet, dass** die Metallplatte (100) durch eine Wärmenachbehandlung in einen Zustand versetzt wird, in dem sie durch mechanische Umformung weiterverarbeitbar ist.

5. Verfahren nach einem der vorhergehenden Ansprüche, **dadurch gekennzeichnet, dass** wenigstens eine Reihe von gesonderten Heizelementen (20; 24) in die Plattenkörper (10, 12) eingebettet wird.

6. Verfahren nach Anspruch 5, **dadurch gekennzeichnet, dass** zusätzlich mindestens ein Temperatursensor (50) pro Heizelement gleichzeitig in die Plattenkörper eingebettet wird.

7. Verfahren nach einem der vorhergehenden Ansprüche, **dadurch gekennzeichnet, dass** als das oder jedes Heizelement (20; 24) ein Rohrheizkörper (40) eingesetzt wird, bei dem wenigstens ein Heizleiter (42) in einen von einem rohrförmigen Metallmantel (44) umschlossenen mineralischen Kern (46) eingebettet ist.

8. Verfahren nach einem der vorhergehenden Ansprüche, **dadurch gekennzeichnet, dass** bei oder nach dem Walzen eine Nut (55) in einen der Plattenkörper (10, 12) eingearbeitet wird, um wenigstens ein Heizelement (20; 24) von einem vorhandenen benachbarten Heizelement (20; 24) zu trennen.

9. Verfahren nach einem der vorhergehenden Ansprüche, **dadurch gekennzeichnet, dass** das oder jedes Heizelement (20; 24) spiral- oder mäanderförmig gewunden zwischen den Plattenkörpern (10, 12) angeordnet wird.

10. Verfahren nach einem der vorhergehenden Ansprüche, **dadurch gekennzeichnet, dass** in Bezug auf die Dicke der Metallplatte (130, 130A) das oder jedes Heizelement (20, 22; 24) außermittig eingebettet wird.

11. Verfahren nach einem der vorhergehenden Ansprüche, **dadurch gekennzeichnet, dass** als die oder jede Schicht aus Aluminium oder einer Aluminiumlegierung eine auf ein anderes Metall mit einer besseren Wärmeleitfähigkeit als Aluminium aufgebrachte Plattierungsschicht (13, 14) aus Aluminium oder einer Aluminiumlegierung eingesetzt wird.

12. Metallplatte, hergestellt nach einem Verfahren gemäß den vorhergehenden Ansprüchen 1 bis 11, bestehend aus wenigstens zwei nicht mit Ausnehmungen versehenen Plattenkörpern (10, 11, 12), in die mindestens ein Heizelement (20, 22; 24) allein durch Materialverdrängung eingebettet worden ist,
**dadurch gekennzeichnet, dass** die Plattenkörper (10, 11, 12) auf ihren einander gegenüberliegenden Seiten jeweils wenigstens eine Schicht aus Aluminium oder einer Aluminiumlegierung aufweisen, die, mit Ausnahme der Berührungsstellen zwischen Plattenkörpern (10, 11, 12) und Heizelement(en) (20, 22; 24), durch eine gegenseitige Diffusionsverbindung gesamtflächig stoffschlüssig miteinander verbunden sind.

13. Metallplatte nach Anspruch 12, **dadurch gekennzeichnet, dass** die Schichten aus Aluminium oder einer Aluminiumlegierung als Kernschichten zwischen zwei Deckschichten (15, 16) aus anderem Metall wie Stahl, rostfreiem Stahl, Kupfer oder Titan angeordnet sind.

14. Metallplatte nach Anspruch 12 oder 13, **dadurch gekennzeichnet, dass** die Metallplatte (100, 100A, 110, 120, 130, 130A) durch eine Wärmenachbehandlung in einen Zustand versetzt ist, in dem sie durch mechanische Umformung weiterverarbeitbar ist.

15. Metallplatte nach einem der Ansprüche 12 bis 14, **dadurch gekennzeichnet, dass** die Metallplatte (100, 100A, 110, 120, 130, 130A) als ein Walzprodukt hergestellt ist.

16. Metallplatte nach einem der Ansprüche 12 bis 15, **dadurch gekennzeichnet, dass** das oder jedes Heizelement (20, 22; 24) wenigstens ein mit einer elektrischen Isolierung versehener Metalldraht ist.

17. Metallplatte nach einem der Ansprüche 12 bis 16, **dadurch gekennzeichnet, dass** das oder jedes Heizelement (20, 22; 24) aus einem Rohrheizkörper (40, 41) besteht, bei dem wenigstens ein Heizleiter (42, 43) in einen von einem rohrförmigen Metallmantel (44) umschlossenen mineralischen Kern (46) eingebettet ist.

18. Metallplatte nach einem der Ansprüche 12 bis 17, **dadurch gekennzeichnet, dass** wenigstens eine Reihe von gesonderten Heizelementen (20, 22; 24) in die Plattenkörper (10, 11, 12) eingebettet ist.

19. Metallplatte nach einem der Ansprüche 12 bis 18, **dadurch gekennzeichnet, dass** mindestens ein Temperatursensor (50) pro Heizelement (20, 22; 24) mit in die Metallplatte (100, 100A, 110, 120, 130, 130A) eingebettet ist.

20. Metallplatte nach einem der Ansprüche 12 bis 19, **dadurch gekennzeichnet, dass** wenigstens ein Heizelement (20, 22; 24) von einem vorhandenen benachbarten Heizelement (20, 22; 24) durch eine in die Metallplatte (100) eingearbeitete Nut (55) thermisch getrennt ist.

21. Metallplatte nach einem der Ansprüche 12 bis 20, **dadurch gekennzeichnet, dass** das oder jedes Heizelement (20, 22; 24) spiral- oder mäanderförmig gewunden in die Metallplatte (100, 100A, 110, 120, 130, 130A) eingebettet ist.

22. Metallplatte nach einem der Ansprüche 12 bis 21, **dadurch gekennzeichnet, dass** in Bezug auf die Dicke der Metallplatte (130, 130A) das oder jedes Heizelement (20, 22; 24) außermittig eingebettet ist.

23. Metallplatte nach einem der Ansprüche 12 bis 22, **dadurch gekennzeichnet, dass** die oder jede Schicht aus Aluminium oder einer Aluminiumlegierung eine auf ein anderes Metall mit einer besseren Wärmeleitfähigkeit als Aluminium aufgebrachte Plattierungsschicht (13, 14) aus Aluminium oder einer Aluminiumlegierung ist.

## Claims

1. A method for producing a metal plate comprising at least one embedded heating element by means of the following steps:
a) arrangement of at least one heating element (20; 24) between at least two plate bodies (10, 12) not provided with recesses for accommodating the or each heating element (20; 24),
b) embedding the or each heating element (20; 24) in direct contact in at least two plate bodies (10, 12) by compressing and material displacement of the plate bodies (10, 12), and
c) at least partly positively bonded interconnection of the plate bodies (10, 12),
**characterised in that** at least two plate bodies (10, 12) respectively comprising at least one layer of aluminium or an aluminium alloy on their sides facing each other are thermally pre-treated at a temperature which is higher than the recrystallisation temperature of the aluminium or the aluminium alloy but lower than the melting point of the aluminium and then pressed against each other by rolling to effect the embedding of the or each heating element (20; 24) in the plate bodies (10, 12) and a reduction of the thickness of the layers in which the layers enter into a bilateral diffusion bond in the area of their sides contacting each other and the plate bodies (10, 12) are thereby joined together over their entire surfaces in a positively bonded manner to form the metal plate (100) to be produced.

2. The method according to claim 1, **characterised in that** the reduction of the thickness of the layers of aluminium or an aluminium alloy amounts to a maximum of 25% in relation to the overall thickness of these layers before they are pressed against each other.

3. The method according to claim 1 or 2, **characterised in that** the layers of aluminium or an aluminium alloy are disposed as core layers between two cover layers (15, 16) of another metal such as steel, stainless steel, copper, or titanium.

4. The method according to one of the preceding claims, **characterised in that** the metal plate (100) is brought into a state by a thermal finishing treatment in which it can be further processed by mechanical reshaping.

5. The method according to one of the preceding claims, **characterised in that** at least one row of separate heating elements (20; 24) is embedded in the plate bodies (10, 12).

6. The method according to claim 5, **characterised in that**, in addition, at least one temperature sensor (50) per heating element is simultaneously embedded in the plate bodies.

7. The method according to one of the preceding claims, **characterised in that** a tubular heating element (40) is used as the or each heating element (20; 24) in which at least one heating conductor (42) is embedded in a mineral core (46) enclosed by a tubular metallic sheath (44).

8. The method according to one of the preceding claims, **characterised in that** a notch (55) is incorporated in one of the plate bodies (10, 12) during or after rolling to separate at least one heating element (20; 24) from an existing adjacent heating element (20; 24).

9. The method according to one of the preceding claims, **characterised in that** the or each heating element (20; 24) is arranged between the plate bodies (10, 12) so that it is helically wound or wound in a meandering pattern.

10. The method according to one of the preceding claims, **characterised in that** the or each heating element (20, 22; 24) is eccentrically embedded in relation to the thickness the metal plate (130, 130A).

11. The method according to one of the preceding claims, **characterised in that** a plating layer (13, 14) of aluminium or an aluminium alloy applied to another metal having a better thermal conductivity than aluminium is used as the or each layer of aluminium or an aluminium alloy.

12. A metal plate produced according to a method according to the preceding claims 1 to 11, consisting of at least two plate bodies (10, 11, 12) not provided with recesses in which at least one heating element (20, 22; 24) was embedded only by material displacement,
**characterised in that** the plate bodies (10, 11, 12) respectively comprise at least one layer of aluminium or an aluminium alloy on their sides facing each other which are, with the exception of the contact points between plate bodies (10, 11, 12) and the heating element(s) (20, 22; 24), joined together over their entire surfaces in a positively bonded manner by a bilateral diffusion bond.

13. The metal plate according to claim 12, **characterised in that** the layers of aluminium or an aluminium alloy are arranged as core layers between two cover layers (15, 16) of another metal such as steel, stainless steel, copper or titanium.

14. The metal plate according to claim 12 or 13, **characterised in that** the metal plate (100, 100A, 110, 120, 130, 130A) is brought into a state in which it can be further processed by mechanical reshaping by a thermal finishing treatment.

15. The metal plate according to one of the claims 12 to 14, **characterised in that** the metal plate (100, 100A, 110, 120, 130, 130A) is produced as a rolled product.

16. The metal plate according to one of the claims 12 to 15, **characterised in that** the or each heating element (20, 22; 24) is at least a metal wire provided with an electrical insulation.

17. The metal plate according to one of the claims 12 to 16, **characterised in that** the or each heating element (20, 22; 24) consists of a tubular heating element (40, 41) in which the at least one heating conductor (42, 43) is embedded in a mineral core (46) enclosed by a tubular metallic sheath (44).

18. The metal plate according to one of the claims 12 to 17, **characterised in that** at least one row of separate heating elements (20, 22; 24) is embedded in the plate bodies (10, 11, 12).

19. The metal plate according to one of the claims 12 to 18, **characterised in that** at least one temperature sensor (50) per heating element (20, 22; 24) is also embedded in the metal plate (100, 100A, 110, 120, 130, 130A).

20. The metal plate according to one of the claims 12 to 19, **characterised in that** at least one heating element (20, 22; 24) is thermally separated from an existing adjacent heating element (20, 22; 24) by a notch (55) incorporated in the metal plate (100).

21. The metal plate according to one of the claims 12 to 20, **characterised in that** the or each heating element (20, 22; 24) is embedded in the metal plate (100, 100A, 110, 120, 130, 130A) so that it is helically wound or wound in a meandering pattern.

22. The metal plate according to one of the claims 12 to 21, **characterised in that** the or each heating element (20, 22; 24) is eccentrically embedded in relation to the thickness the metal plate (130, 130A).

23. The metal plate according to one of the claims 12 to 22, **characterised in that** the or each layer of aluminium or an aluminium alloy is a plating layer (13, 14) of aluminium or an aluminium alloy applied to another metal having a better thermal conductivity than aluminium.

## Revendications

1. Procédé pour produire une plaque métallique avec au moins un élément de chauffage encastré par les étapes suivantes:
a) agencement d'au moins un élément de chauffage (20; 24) entre deux corps de plaque (10, 12) dépourvus d'exclusions pour recevoir le ou chaque élément de chauffage (20; 24),
b) encastrement du ou de chaque élément de chauffage (20; 24) en contact direct dans au moins deux corps de plaque (10, 12) par compression et déplacement matériel des corps de plaque (10, 12) et
c) jonction mutuelle des corps de plaque (10, 12) par adhérence matérielle au moins par endroits,
**caractérisé en ce qu'**au moins deux corps de plaque (10, 12), qui comportent chacun sur leurs faces opposées au moins une couche d'aluminium ou d'un alliage d'aluminium, sont prétraités thermiquement à une température au-dessus de la température de recristallisation de l'aluminium ou de l'alliage d'aluminium mais au-dessous du point de fusion et puis pressés l'un contre l'autre par laminage afin d'effectuer l'encastrement du ou de chaque élément de chauffage (20; 24) dans les corps de plaque (10, 12) et une réduction d'épaisseur des couches lors de laquelle les couches entrent en liaison de diffusion bilatérale dans la zone de leurs faces qui sont en contact l'une avec l'autre, les corps de plaque (10, 12) étant liés ainsi l'un avec l'autre sur leur surface entière par adhérence matérielle.

2. Procédé selon la revendication 1, **caractérisé en ce que** la réduction d'épaisseur des couches d'aluminium ou de l'alliage d'aluminium vaut au plus 25 % en relation avec l'épaisseur totale de ces couches avant le pressage des deux corps de plaque l'un contre l'autre.

3. Procédé selon la revendication 1 ou 2, **caractérisé en ce que** les couches d'aluminium ou d'un alliage d'aluminium sont agencées comme couches centrales entre deux couches de couverture (15, 16) d'un autre métal tel que de l'acier, de l'acier inoxydable, du cuivre ou du titane.

4. Procédé selon l'une des revendications précédentes, **caractérisé en ce que** la plaque métallique (100) est soumise à un traitement thermique ultérieur et mise ainsi dans un état dans lequel elle peut être transformé par façonnement mécanique.

5. Procédé selon l'une des revendications précédentes, **caractérisé en ce qu'**au moins une série d'éléments de chauffage séparés (20; 24) est encastré dans les corps de plaque (10, 12).

6. Procédé selon la revendication 5, **caractérisé en ce qu'**en plus au moins un capteur de température (50) par élément de chauffage est encastré dans les corps de plaque en même temps.

7. Procédé selon l'une des revendications précédentes, **caractérisé en ce qu'**un corps de chauffage de tuyau (40) est utilisé comme le ou chaque élément de chauffage (20; 24), le corps de chauffage de tuyau comportant au moins un conducteur de chauffage (42) qui est encastré dans un noyau (46) minéral qui est entouré d'une gaine (44) métallique tubulaire.

8. Procédé selon l'une des revendications précédentes, **caractérisé en ce qu'**une rainure (55) est produite dans l'un des corps de plaque (10, 12) lors du laminage ou après celui-ci afin de séparer au moins un élément de chauffage (20; 24) d'un élément de chauffage voisin (20; 24) existant.

9. Procédé selon l'une des revendications précédentes, **caractérisé en ce que** le ou chaque élément de chauffage (20; 24) est agencé entre les corps de plaque (10, 12) en spirale ou sous forme de méandre.

10. Procédé selon l'une des revendications précédentes, **caractérisé en ce que** le ou chaque élément de chauffage (20, 22; 24) est encastré hors du centre vis-à-vis de l'épaisseur de la plaque métallique (130, 130A).

11. Procédé selon l'une des revendications précédentes, **caractérisé en ce qu'**une couche de placage (13, 14), d'aluminium ou d'un alliage d'aluminium, déposée sur un autre métal avec une conductivité thermique meilleure que celle de l'aluminium est utilisé comme la ou chaque couche d'aluminium ou d'un alliage d'aluminium.

12. Plaque métallique produit selon un procédé selon l'une des revendications précédentes 1 à 11, qui consiste d'au moins deux corps de plaque dépourvus d'exclusions (10, 11, 12) dans lesquels au moins un élément de chauffage (20, 22; 24) a été encastré seulement par déplacement matérielle,
**caractérisée en ce que** les corps de plaque (10, 11, 12) comportent chacun au moins une couche d'aluminium ou d'un alliage d'aluminium sur leur faces opposés, qui, à l'exception des points de contact entre les corps de plaque (10, 11, 12) et les éléments de chauffage (20, 22; 24), sont liées par liaison de diffusion bilatérale sur la surface entière par adhérence matérielle.

13. Plaque métallique selon la revendication 12, **caractérisée en ce que** les couches d'aluminium ou d'un alliage d'aluminium sont agencées comme couches centrales entre deux couches de couverture (15, 16) d'un autre métal tel que de l'acier, de l'acier inoxydable, du cuivre ou du titane.

14. Plaque métallique selon la revendication 12 ou 13, **caractérisée en ce que** la plaque métallique (100, 100A, 110, 120, 130, 130A) est soumise à un traitement thermique ultérieur et mise ainsi dans un état dans lequel elle peut être transformée par façonnement mécanique.

15. Plaque métallique selon l'une des revendications 12 à 14, **caractérisée en ce que** la plaque métallique (100, 100A, 110, 120, 130, 130A) est produite sous forme d'un produit de laminage.

16. Plaque métallique selon l'une des revendications 12 à 15, **caractérisée en ce que** le ou chaque élément de chauffage (20, 22; 24) est au moins un fil métallique pourvu d'une isolation électrique.

17. Plaque métallique selon l'une des revendications 12 à 16, **caractérisée en ce que** le ou chaque élément de chauffage (20, 22; 24) consiste d'un corps de chauffage tubulaire (40, 41) comportant au moins un conducteur de chauffage (42, 43) encastré dans un noyau minéral (46) entouré d'une gaine métallique (44) tubulaire.

18. Plaque métallique selon l'une des revendications 12 à 17, **caractérisée en ce qu'**au moins une série d'éléments de chauffage séparés (20, 22; 24) est encastrée dans les corps de plaque (10, 11, 12).

19. Plaque métallique selon l'une des revendications 12 à 18, **caractérisée en ce qu'**au moins un capteur de température (50) par élément de chauffage (20, 22; 24) est aussi encastré dans la plaque métallique (100, 100A, 110, 120, 130, 130A).

20. Plaque métallique selon l'une des revendications 12 à 19, **caractérisée en ce qu'**au moins un élément de chauffage (20, 22; 24) est séparé thermiquement d'un élément de chauffage (20, 22; 24) voisin existant par une rainure (55) formée dans la plaque métallique (100).

21. Plaque métallique selon l'une des revendications 12 à 20, **caractérisée en ce que** le ou chaque élément de chauffage (20, 22; 24) est encastré dans la plaque métallique en spirale ou sous forme de méandre.

22. Plaque métallique selon l'une des revendications 12 à 21, **caractérisée en ce que** le ou chaque élément de chauffage (20, 22; 24) est encastré hors du centre vis-à-vis de l'épaisseur de la plaque métallique (130, 130A).

23. Plaque métallique selon l'une des revendications 12 à 22, **caractérisée en ce que** la ou chaque couche d'aluminium ou d'un alliage d'aluminium est une couche de placage (13, 14) d'aluminium ou d'un alliage d'aluminium déposée sur un autre métal avec une conductivité thermique meilleure que celle de l'aluminium.
